## Europäisches Patentamt

## European Patent Office

## Office européen des brevets

(19)

(11) Veröffentlichungsnummer: **0 141 405**
**B1**

(12) **EUROPÄISCHE PATENTSCHRIFT**

(45) Veröffentlichungstag der Patentschrift:
24.09.86

(51) Int. Cl.⁴: **F 15 B 15/08**

(21) Anmeldenummer: **84113158.4**

(22) Anmeldetag: **01.11.84**

(54) **Druckmittelzylinder.**

(30) Priorität: **08.11.83 DE 3340291**

(43) Veröffentlichungstag der Anmeldung:
**15.05.85 Patentblatt 85/20**

(45) Bekanntmachung des Hinweises auf die Patenterteilung:
**24.09.86 Patentblatt 86/39**

(84) Benannte Vertragsstaaten:
**AT BE CH DE FR GB IT LI NL SE**

(56) Entgegenhaltungen:
**DE-A-2 908 605**
**DE-A-3 124 915**
**DE-C-949 534**
**GB-A-470 088**
**GB-A-478 427**
**US-A-2 473 430**
**US-A-2 745 382**

(73) Patentinhaber: **ORIGA GmbH Pneumatik,**
**Mühlwiesenstrasse 26, D-7024 Filderstadt 1 (DE)**

(72) Erfinder: **Der Erfinder hat auf seine Nennung verzichtet**

(74) Vertreter: **Patentanwälte Ruff und Beier,**
**Neckarstrasse 50, D-7000 Stuttgart 1 (DE)**

LIBER, STOCKHOLM 1986

## Beschreibung

Die Erfindung betrifft einen Druckmittelzylinder mit einem rohrartigen Gehäuse, in dem mehrere parallele zylindrische Innenräume mit je einem in Längsrichtung verlaufenden Schlitz angeordnet sind und jedem Innenraum ein Kolben längsverschieblich geführt ist, von denen jeder einen durch den zugehörigen Schlitz nach außen ragenden Kraftabnahmeansatz aufweist, der über eine Verbindungseinrichtung mit den anderen Kraftabnahmeansätzen verbunden ist, wobei mindestens ein Innenraum stirnseitig abgeschlossen und mit Einlaß- und Auslaßöffnungen versehen ist, der in diesem Innenraum geführte Kolben an beiden Enden eine Dichtung aufweist und der Längsschlitz dieses Innenraums von innen durch ein Dichtband abgedichtet ist.

Aus der GB-A-470 088 ist eine derartige Druckmittelzylinder-Anordnung bekannt. Bei dieser Anordnung sind mehrere Zylinder nebeneinander angeordnet, die durch äußere Verstärkungsstege verstärkt sind. Mit dieser Anordnung soll die Aufweitung der Längsschlitze verhindert werden. Bei der beschriebenen Ausführungsform sind drei derartige Zylinder vorhanden, deren Kraftabnahmeansätze zwischen sich jeweils einen Winkel von 120° bilden. Die Kraftabnahmeansätze sind mit einem Sattel verbunden, der im Querschnitt etwa V-förmig ausgebildet ist. Zur Führung der Kraftabnahmeansätze und des mit diesen verbundenen Sattels, dient ein Schlitten mit Rädern, die in Führungsschienen laufen.

Bei kolbenstangenlosen Druckmittelzylindern mit einem einzigen Kolben ist es bekannt (DE-A-3124 915), zu beiden Seiten des Längsschlitzes auf der Außenseite des Zylinderrohres zwei parallele Führungsbahnen anzuordnen und das Kraftübertragungselement mit einem Bügel zu versehen, der sich gegen die Führungsbahnen abstützt. Diese Ausführung hat jedoch den Nachteil, daß zum einen die Führungsbahnen ständig offen liegen und jeglicher Verschmutzung zugänglich sind, und daß zum anderen bei der Bewegung des Kolbens in einem aufgeweiteten Bereich erhebliche Reibungskräfte auftreten, die durch Aufbringung zusätzlichen Druckes überwunden werden müssen.

Eine ähnliche Anordnung ist aus US-A-2473 430 bekannt. Hierbei ist der Kraftabnahmeansatz mit einem Bügel verbunden, der etwa U-förmig über das Äußere des Gehäuses greift und mit seinen beiden Enden auf je einer parallel zum Zylindergehäuse geführten Stange gleitend befestigt ist. Hierbei treten die gleichen Nachteile auf wie bei der Anordnung nach DE-A-3124 915.

Bei Druckmittelzylindern mit Kolbenstange ist die Anordnung paralleler Kolben bekannt. Dabei kann jedoch die Anordnung mehrerer paralleler Zylinder nicht dazu beitragen, eine Führung des äußeren Endes der Kolbenstange zu gewährleisten.

Der Erfindung liegt die Aufgabe zugrunde, einen Druckmittelzylinder der eingangs genannten Art derart auszugestalten, daß eine exakte seitliche Führung des Kraftabnahmeansatzes und des Kolbens geschaffen wird.

Zur Lösung dieser Aufgabe ist erfindungsgemäß vorgesehen, daß zwei Innenräume und zwei Kolben nebeneinander in dem gemeinsamen Gehäuse angeordnet und durch eine mittlere Trennwand voneinander getrennt sind, und die Kraftabnahmeansätze der beiden Kolben parallel zueinander verlaufen und mit einer Verbindungsplatte verschraubt sind, wobei der abgedichtete Längsschlitz des mindestens einen Innenraumes zusätzlich durch in äußeres Dichtband abgedichtet ist, das sich durch den Kraftabnahmeansatz hindurch erstreckt.

Durch diese Anordnung wird gewährleistet, daß die Kolben und ihre Kraftabnahmeansätze exakt an der nicht verformbaren mittleren Trennwand geführt sind. Dadurch kann eine Seitwärtsbewegung der Kraftabnahmeansätze auch dann nicht erfolgen, wenn die Längsschlitze aufgrund des Einwirkens des Druckes leicht aufgeweitet werden. Eine auftretende Erweiterung der Längsschlitze wirkt sich nur an der Seite der Längsschlitze aus, die von der Trennwand abgewandt sind. Es kann aufgrund der Parallelität der Kraftabnahmeansätze ein genau dosierbares Führungsspiel für die Montage der Zylindereinheit vorgegeben werden.

Die Anordnung des an sich bekannten zusätzlichen äußeren Dichtbandes ermöglicht es, daß auch bei Aufweitung des Längsschlitzes kein Druckverlust eintreten kann, so daß ein ggf. noch auftretendes Aufweiten des Längsschlitzes auf die Wirkungsweise des von der Erfindung vorgeschlagenen Druckmittelzylinders keinen Einfluß hat.

Die Anordnung in einem gemeinsamen Gehäuse führt zu einem Optimum an Starrheit des Gehäuses, so daß auch die Möglichkeit einer Verbiegung des Gehäuses an sich verringert ist. Die beiden Innenräume müssen nicht den gleichen Querschnitt aufweisen, sie können beispielsweise eine unterschiedliche Querschnittsfläche oder unterschiedliche Form aufweisen. Besonders sinnvoll ist es jedoch, bei den Innenräumen die gleiche Form und den gleichen Querschnitt zu geben.

Während der eine Kolben an beiden Enden eine Dichtung aufweist, damit er vom Druckmittel bewegt werden kann, ist es möglich, daß der zweite Kolben keine Dichtung aufweist und als Führungskolben dient. Es kann daher auch ausreichen, daß er den Querschnitt nur teilweise ausfüllt, wobei er selbstverständlich auch in diesem Falle an mindestens einem Teil der Innenwandung anliegen muß. Die von der Erfindung vorgeschlagenen Maßnahmen führen nicht nur zu einer exakten Führung des Kolbens, es ist darüber hinaus auch dafür gesorgt, daß die gesamte Führungseinrichtung im Innern des Gehäuses liegt und nur durch den Längsschlitz zugänglich ist, so daß die Gefahr der Verschmutzung auch schon bei dieser Ausbildung beseitigt ist. Dies gilt umso mehr, wenn, wie die Erfindung weiterhin vorschlägt, auch der Innenraum für den Führungskolben an beiden Stirnseiten abgeschlossen ist.

In Weiterbildung der Erfindung kann vorgesehen sein, daß beide Kolben Dichtungen für ein Druckmittel aufweisen. Dadurch wird es möglich, auch in dem Innenraum des Zylinders, in dem der zweite Kolben angeordnet ist, auf diesen Druck auszuüben, so daß in beiden parallel verlaufenden Innenräumen der gleiche Druck herrscht. Dadurch wird die mittlere Trennwand von jeder einseitigen seitlichen Krafteinwirkung befreit, so daß an dieser Trennwand keinerlei Verformung bzw. seitliche Bewegung auftreten kann. Dadurch ergeben sich völlig druckunabhängige Führungseigenschaften des erfindungsgemäßen Druckmittelzylinders. Auf diese Weise wird gleichzeitig erreicht, daß zum einen kein einseitiges Schubmoment einwirken kann und zum anderen genau dosierbares Führungsspiel für die Montage der Zylindereinheit vorgegeben werden kann. Der Druckmittelzylinder nach der Erfindung ist daher wesentlich günstiger als bekannte Druckmittelzylinder, bei denen die Führungen sich seitlich an den Außen- oder Innenwänden der Druckmittelzylinder abstützen. Bei Einsatzbereichen, in denen es auf eine besonders präzise Führung ankommt, ist diese Ausbildung daher besonders bevorzugt.

Es ist möglich, daß die beiden Innenräume zur Einwirkung des gleichen Druckmittels ausgebildet sind. Dies könnte beispielsweise dadurch erreicht werden, daß die die Innenräume stirnseitig abschließenden Bauelemente einen einzigen Anschluß für das Druckmittel aufweisen, der mit beiden Innenräumen verbunden ist.

Besonders günstig ist es jedoch, wenn beide Innenräume getrennte Zuleitungen aufweisen, so daß in beiden Innenräumen entweder das gleiche Druckmittel bei unterschiedlichen Bedingungen, oder aber unterschiedliche Druckmittel einwirken können. In diesem Fall können beide Druckräume unabhängig voneinander gestaltet werden und die Eigenschaften verschiedener Druckmittel ausgenutzt werden. Beispielsweise kann der eine Kolben mit Hilfe von Luftdruck und der andere mit Hilfe von Öldruck beaufschlagt werden.

In Weiterbildung kann vorgesehen sein, daß beide Kolben etwa die gleiche Länge aufweisen und sich die Verbindungsplatte etwa über die gesamte Länge beider Kolben erstreckt. Da die Kolben nebeneinander angeordnet sind, wird auf diese Weise die gesamte Länge beider Kolben zur Gewährleistung der Führung ausgenutzt, so daß allein aus geometrischen Gründen die Führung besonders gut ist, ohne daß die Druckmittelzylinderanordnung insgesamt eine größere Baulänge erfordern würde. Um die Führung noch besser gegen Verschmutzung abzudichten, kann erfindungsgemäß vorgesehen sein, daß der Längsschlitz des Innenraumes für den Führungskolben durch ein Dichtband von außen abgedichtet ist, das durch den äußeren Teil des Ansatzes des Hilfskolbens hindurchgeführt ist. Dieses Dichtband sorgt für ein einwandfreies Abdichten des Längsschlitzes außerhalb des Bereiches, in dem der Ansatz selbst angeordnet ist. Es kann dabei vorgesehen sein, daß das Gehäuse im Bereich des Längsschlitzes eine mit dem Dichtband zusamenwirkende Einrichtung zu dessen positiver Festlegung aufweist. Dabei kann es sich um das Zusammenwirken von magnetischen Streifen zu beiden Seiten des Längsschlitzes oder um einzelne im Bereich des Längsschlitzes eingesetzte Permanentmagnete handeln, die das ggf. aus Stahl bestehende Dichtband anziehen. Es ist natürlich auch möglich, an der Gehäuseaußenseite lippenartige Vorsprünge anzuordnen, hinter die das aus beispielsweise elastischem Kunststoff bestehende äußere Dichtband eindrückbar ist. Das Eindrücken hinter diese Lippen kann von einer an dem Ansatz angebrachten reißverschlußähnlichen Einrichtung durchgeführt werden.

Mit Vorteil können beide Kolben identisch ausgebildet sein, wobei ggf. die Längsschlitze beider Kolben durch je ein Dichtband von außen und von innen abgedichtet sind, von denen die äußeren Dichtbänder durch die äußeren Teile der Kraftabnahmeansätze und die inneren Dichtbänder durch die Kolben hindurchgeführt sind.

Weitere Merkmale, Einzelheiten und Vorzüge der Erfindung ergeben sich aus der folgenden Beschreibung bevorzugter Ausführungsformen sowie anhand der Zeichnung. Hierbei zeigen:

Fig. 1 eine abgebrochene, teilweise längs Linie I-I in Fig. 2 geschnittene Längsansicht einer Druckmittelzylinderanordnung:

Fig. 2 einen Schnitt etwa nach Linie II-11 in Fig. 1;

Fig. 3 einen der Fig. 2 entsprechenden Schnitt durch eine geänderte Ausführungsform mit einem nur teilweise ausgebildeten Hilfskolben;

Fig. 4 eine der Fig. 1 entsprechende Ansicht einer weiteren Ausführungsform;

Fig. 5 schematisch ein Ende eines Zylinders;

Fig. 6 einen Schnitt durch die Ausführungsform in Fig. 4 etwa längs Linie VI-VI in Fig. 4.

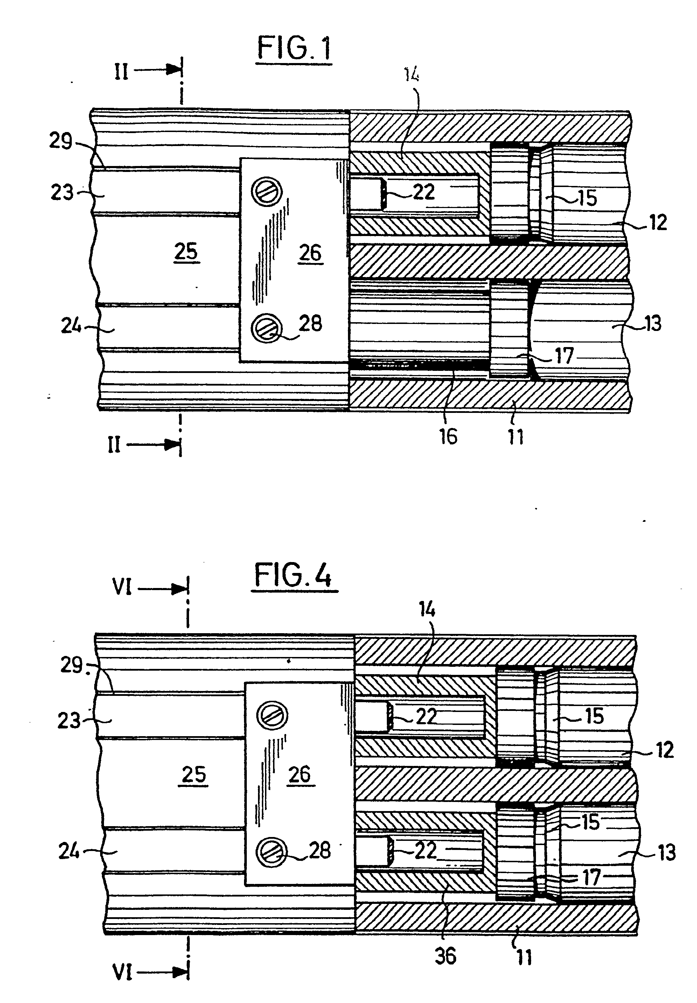

In Fig. 1 ist eine Ansicht eines Gehäuses 11 einer Druckmittelzylinderanordnung dargestellt. Das Gehäuse 11 enthält zwei in Längsrichtung verlaufende zylindrische Innenräume 12, 13. Der Querschnitt der Innenräume ist beim dargestellten Ausführungsbeispiel kreisförmig, er könnte jedoch auch andere Formen aufweisen. Innerhalb des Innenraums 12 ist ein Kolben 14 eingesetzt, der an seinen beiden Enden eine Dichtung 15 aufweist. Das Gehäuse 11 ist an beiden in Fig. 1 nicht dargestellten Enden abgeschlossen und mit einer Einlaß- bzw. Auslaßöffnung versehen, durch die Druckmittel, beispielsweise Druckluft, in den Innenraum 12 auf jeweils einer Seite des Kolbens 14 eingebracht werden kann. Durch Einbringen von Druck in den Innenraum 12 auf einer Seite des Kolbens 14 wird dieser in entgegengesetzter Richtung verschoben, wobei durch diese Verschiebung des Kolbens 14 eine mit dem Kolben verbundene Einrichtung bewegt werden kann.

Parallel zu dem Innenraum 12 für den Kolben 14 ist der zweite Innenraum 13 angeordnet, der den gleichen Durchmesser und die gleiche Querschnittsform aufweist. In dem Innenraum 13 ist ein Hilfskolben 16 angeordnet, der an seinen beiden Enden verbreitert ist und in diesem verbreiterten Bereich 17 beispielsweise mit einer haftmindernden Beschichtung versehen sein kann. Der Hilfskolben 16 besitzt etwa die gleiche Länge wie der Kolben 14.

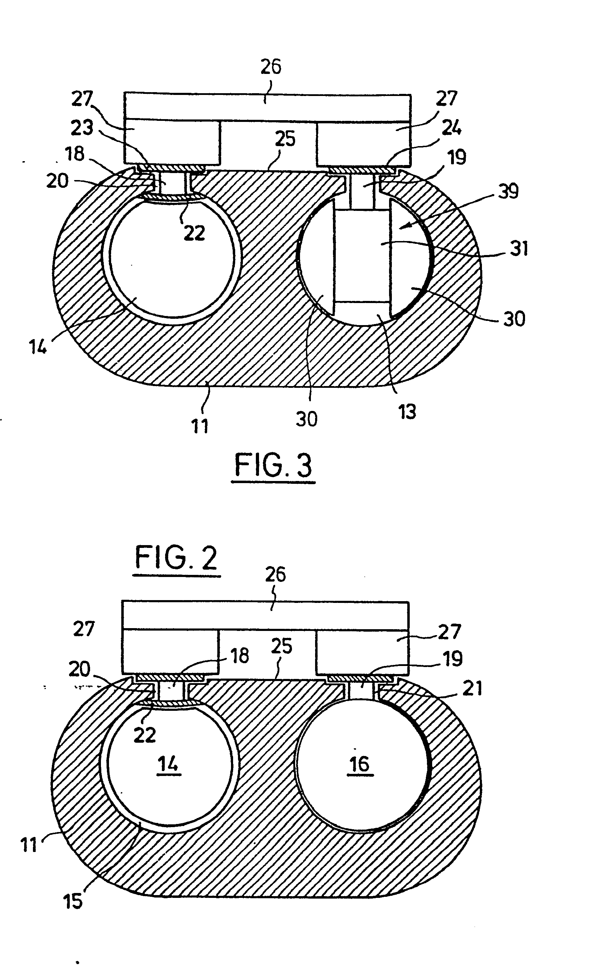

Wie sich aus Fig. 2 ergibt, ist sowohl der Kolben 14 als auch der Hilfskolben 16 mit je einem Ansatz 18, 19 versehen, die beide durch de einen Längsschlitz 20, 21 in dem Gehäuse 11 nach außen ragen. Wie sich ebenfalls aus Fig. 1 ergibt, ist sowohl die dem Innenraum 12 zugewandte Seite des Längsschlitzes 20 als auch die der Außenseite des Gehäuses 11 zugewandte Seite des Längsschlitzes 20 mit je einem Dichtband 22, 23 abgedichtet. Diese Dichtbänder dienen beim oberen Kolben 14 der druckdichten Abdichtung des Innenraums 12. Der Längsschlitz 21 für den Hilfskolben 16 ist an seiner Außenseite ebenfalls mit Hilfe eines Dichtbandes 24 abgedichtet, das das Eindringen von Schmutz in die Führung verhindern soll. Beide Ansätze 18, 19 verlaufen parallel zueinander und senkrecht zu der einen Außenfläche 25 des Gehäuses 11. Beide Ansätze 18, 19 sind durch eine Verbindungsplatte 26 starr miteinander verbunden, wobei die Verbindungsplatte 26 auf an den Ansätzen angebrachte Abstandsteile 27 mit Hilfe von Schrauben 28 aufgeschraubt ist.

Die Außenfläche 25 weist zu beiden Seiten der Längsschlitze 20, 21 flache Nuten 29 auf, in denen die Dichtbänder 23, 24 seitlich geführt sind, so daß ein seitliches Verschieben der Dichtbänder 23, 24 nicht möglich ist. Dadurch wird auch eine relativ glatte Oberfläche der Außenfläche 25 erreicht.

Wie sich insbesondere aus der vereinfachten Fig. 2 ergibt, widersetzt sich der Hilfskolben 16 jedem Versuch der Anordnung, sich im Bereich des Innenraumes 12 für den Kolben 14 aufzuweiten. Darüber hinaus werden jegliche Art von Seitenkräften, die auf den Ansatz 18 wirken können, durch die starre Anordnung der beiden Kolben und der Verbindungsplatte 26 aufgenommen, so daß seitliche Kräfte nicht von den Längskanten der Längsschlitze 20, 21 aufgenommen zu werden brauchen.

In Fig. 3 ist eine abgeänderte Ausführungsform des Hilfskolbens dargestellt. Dieser Hilfskolben 39 enthält zwei im Querschnitt kreissegmentartige Abschnitte 30, die sich im Querschnitt über weniger als die Hälfte des Kreises erstrecken, und die durch einen zylindrischen Mittelabschnitt 31 miteinander verbunden sind. Dieser Kolben 39 erfüllt die gleichen Zwecke wie der Hilfskolben 16 nach Fig. 2, da er eine Führung des Hilfskolbens an der Innenwandung des Innenraumes 13 ermöglicht. Darüber hinaus hat dieser Kolben den Vorteil, daß sich in Längsrichtung gesehen zu seinen beiden Seiten kein Luftpolster aufbauen kann. Selbstverständlich läßt sich der Aufbau eines Luftpolsters auch durch eine oder mehrere in Längsrichtung des Kolbens 16 in Fig. 2 verlaufende Bohrungen oder Durchbrüche verhindern.

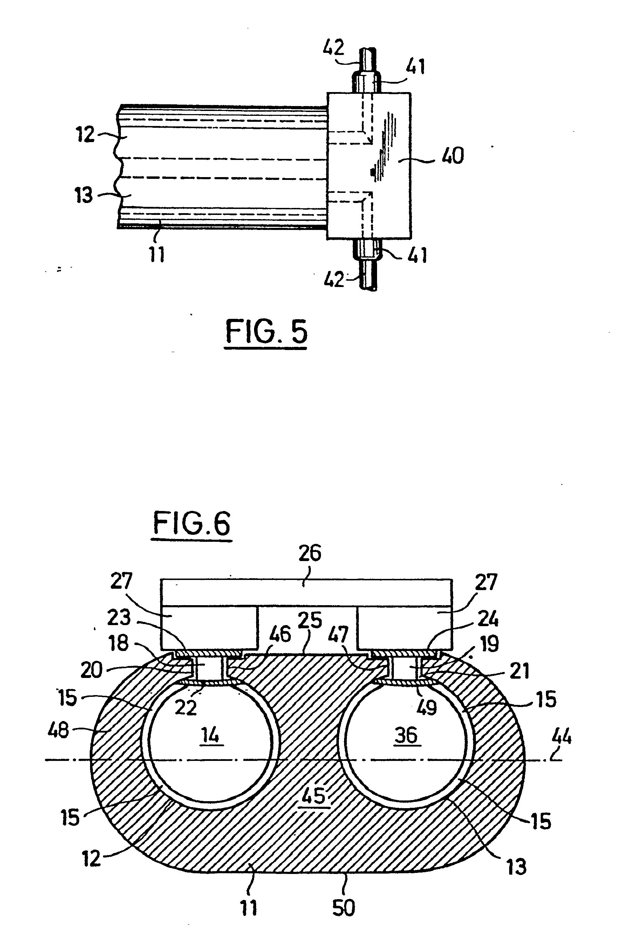

Bei der in Fig. 4 dargestellten Ausführungsform ist der Hilfskolben 36 ebenfalls als abgedichteter Kolben ausgeführt, so daß er also an seinen beiden Enden eine Dichtung 15 aufweist. In diesem Fall ist der Hilfskolben 36 ebenfalls von der Innenseite des Gehäuses her durch ein Dichtband 22 abgedichtet, das im Bereich des Kolbens durch diesen hindurchgeführt ist. Die Ausbildung des Hilfskolbens 36 ist der Ausbildung des Kraftübertragungskolbens 14, siehe Fig. 1, identisch. Im übrigen entspricht die Ausführungsform nach Fig. 4 der Ausführungsform nach Fig. 1, so daß nicht nochmals eine eigene Beschreibung folgt. Aufgrund der auch in den Abmessungen identischen Ausführung beider Gehäuse kann auch bei einem schon existierenden Zylinder die Hilfskolbenanordnung nach Fig. 1 durch die Hilfskolbenanordnung nach Fig. 4 ersetzt werden.

Fig. 5 zeigt rein schematisch das Ende einer Zylinderanordnung, wie es von der Erfindung vorgeschlagen wird. Das Gehäuse 11 ist stirnseitig mit einem Bauteil 40 abgeschlossen, das die beiden Innenräume 12, 13 nach außen hin abdichtet. In dem Bauteil 40 sind auch die Enden der Dichtbänder untergebracht. Wie sich aus Fig. 5 ergibt, enthält das Bauteil 40 zwei Anschlüsse 41 für je eine Druckleitung 42. Beide Druckleitungen können getrennt voneinander gesteuert werden. Damit wird es möglich, die beiden Innenräume mit unterschiedlichen Druckmitteln zu beaufschlagen, die natürlich auch unterschiedlich gesteuert werden können. Selbstverständlich ist es auch möglich, in beiden Innenräumen 12, 13 das gleiche Druckmittel einwirken zu lassen, wobei auch dieses wiederum unterschiedlich gesteuert werden kann.

Es ist natürlich auch möglich, in beiden Druckräumen das gleiche Druckmittel mit gleichen Bedingungen einwirken zu lassen.

Der in Fig. 6 gezeigte Querschnitt durch das Gehäuse 11 zeigt nochmals die zwei parallel zueinander verlaufenden Innenräume, in denen je ein Kolben 14, 36 angeordnet ist. Beide Innenräume, deren Querschnitt von den Kolben bzw. ihren Dichtungen 15 ausgefüllt ist, sind gegenüber einer Längsmittelebene des Gehäuses 11 in Richtung auf die Außenseite 25 versetzt, so daß das Gehäuse bezüglich dieser Längsmittelebene, die in Fig. 6 durch die gestrichelte Linie 44 angedeutet ist, unsymmetrisch ausgebildet ist. Die Kraftabnahmeansätze 18, 19 beider Kolben 14, 36 erstrecken sich von den Kolben in Richtung auf die Außenseite 25, der gegenüber die Innenräume einen geringeren Abstand aufweisen.

Beide Innenräume sind durch eine starre Zwischenwand 45 voneinander getrennt, die sich quer durch das Gehäuse 11 erstreckt. Die Außenseite 25, die die Zwischenwand 45 zur oberen Seite hin begrenzt, ist im Querschnitt der Fig. 6 geradlinig ausgebildet, so daß die Ränder 46 und 47 der beiden Längsschlitze 20, 21 auf beiden Seiten eines kräftigen Steges liegen.

Wird beispielsweise in den in Fig. 6 rechten Innenraum Druck gegeben, so erfolgt aufgrund der Elastizität des Materials des Gehäuses 11 eine leichte Vergrößerung des Innenraums. Aufgrund der Tatsache, daß der Innenraum näher zur Außenfläche 25 des Gehäuses 11, an der auch die Kraftabnahmeansätze 18, 19 ausmünden, angeordnet ist und aufgrund der starren Zwischenwand 45 verlagert sich die Aufweitung des rechten Innenraums ausschließlich auf den rechten Randbereich 48 des Gehäuses 11. Die linke Hälfte des rechten Innenraums 13 bleibt daher kreisrund ohne Verformung, während sich die rechte Hälfte des Innenraums 13 nach außen vergrößert. Der Kolben 36, der bei dem Ausführungsbeispiel nach Fig. 6 identisch zum Kolben 14 ausgebildet ist, wird daher an der linken Hälfte des Innenraums 13 genauso geführt, wie bei unverformtem Innenraum 13. Ein Ausweichen des Kolbens 36 nach rechts in den leicht aufgeweiteten Teil des Innenraums 13 ist jedoch nicht möglich, da aufgrund der starren Verbindung des Kolbens 36 über den Ansatz 19, die Verbindungsbrücke 26 und den Ansatz 18 mit dem Kolben 14 dieser gleichzeitig nach rechts bewegt werden müßte, was durch die Zwischenwand 45 verhindert wird. Dadurch bleibt der Kolben 36, ebenso auch der Kolben 14, auch bei der Aufweitung der beiden Innenräume in seiner Normallage, was zu der gewünschten exakten Führung führt.

Das gleiche gilt selbstverständlich, wenn man bei der Betrachtung der Anordnung nach Fig. 6 vom linken Kolben 14 ausgeht. Der Kolben 36 ist nämlich genauso aufgebaut wieder Kolben 14, er besitzt ebenfalls ein inneres Dichtband 49, das dem inneren Dichtband 22 des Kolbens 14 entspricht. Die äußeren Dichtbänder 23, 24 sind ebenfalls bei beiden Kolben identisch.

Beide Kraftabnahmeansätze 18, 19 verlaufen parallel zueinander und treten auf der gleichen Außenseite 25 des Gehäuses 11 aus. Der Abstand zwischen der Innenwandung der beiden Innenräume 12, 13 und der Außenfläche 25, auf der die Kraftabnahmeansätze 18, 19 ausmünden, ist deutlich kleiner als der entsprechende Abstand auf der gegenüberliegenden Außenseite 50 des Gehäuses 11.

**Patentansprüche**

1. Druckmittelzylinder mit einem rohrartigen Gehäuse (11), in dem mehrere parallele zylindrische Innenräume (12, 13) mit je einem in Längsrichtung verlaufenden Schlitz (20, 21) angeordnet sind und In jedem Innenraum (12, 13) ein Kolben (14, 16, 36, 39) längsverschieblich geführt ist, von denen jeder einen durch den zugehörigen Schlitz (20, 21) nach außen ragenden Kraftabnahmeansatz (18, 19) aufweist, der über eine Verbindungseinrichtung mit den anderen Kraftabnahmeansätzen (18, 19) verbunden ist, wobei mindestens ein Innenraum (12, 13) stirnseitig abgeschlossen und mit Einlaß- und Auslaßöffnungen versehen ist, der in diesem Innenraum (12, 13) geführte Kolben (14, 36) an beiden Enden eine Dichtung (15) aufweist und der Längsschlitz (20) dieses Innenraums (12) von innen durch ein Dichtband (22) abgedichtet ist, dadurch gekennzeichnet , daß zwei Innenräume (12, 13) und zwei Kolben (14, 16, 36, 39) nebeneinander in dem gemeinsamen Gehäuse (11) angeordnet und durch eine mittlere Trennwand (45) voneinander getrennt sind, und die Kraftabnahmeansätze (18, 19) der beiden Kolben (14, 16, 36, 39) parallel zueinander verlaufen und mit einer Verbindungsplatte (26) verschraubt sind, wobei der abgedichtete Längsschlitz (20) des mindestens einen Innenraumes (12, 13) zusätzlich durch ein äußeres Dichtband (23) abgedichtet ist, das sich durch den Kraftabnahmeansatz (18) hindurch erstreckt.

2. Druckmittelzylinder nach Anspruch 1, dadurch gekennzeichnet, daß ein Kolben (16, 39) keine Dichtung aufweist und als Führungskolben dient.

3. Druckmittelzylinder nach Anspruch 1, dadurch gekennzeichnet, daß beide Kolben (14, 38) Dichtungen (15) aufweisen.

4. Druckmittelzylinder nach einem der vorhergehenden Ansprüche, dadurch gekennzeichnet, daß die Innenräume (12, 13) zur Einwirkung des gleichen Druckmittels ausgebildet sind.

5. Druckmittelzylinder nach einem der Ansprüche 1 bis 3, dadurch gekennzeichnet, daß die Innenräume (12, 13) zur Einwirkung unterschiedlicher Druckmittel ausgebildet sind.

6. Druckmittelzylinder nach einem der vorhergehenden Ansprüche, dadurch gekennzeichnet, daß beide Kolben (14, 16, 36, 39) etwa die gleiche Länge aufweisen und sich die Verbindungsplatte (26) etwa über die gesamte Länge der Kolben (14, 16, 36, 39) erstreckt.

7. Druckmittelzylinder nach einem der Ansprüche 1 und 3 bis 6, dadurch gekennzeichnet, daß beide Kolben (14, 36) identisch ausgebildet sind.

8. Druckmittelzylinder nach einem der Ansprüche 2 bis 7, dadurch gekennzeichnet, daß der Längsschlitz (21) des Innenraums (13) für den Führungskolben (16, 39) durch ein Dichtband (24) von außen abgedichtet ist, das durch den äußeren Teil des Kraftabnahmeansatzes (19) des Führungskolbens (18, 39) hindurchgeführt ist.

9. Druckmittelzylinder nach einem der vorhergehenden Ansprüche, dadurch gekennzeichnet, daß die Längsschlitze (20, 21) beider Kolben (14, 18, 36, 39) durch je ein Dichtband (22, 23, 24) von außen und von innen abgedichtet sind, von denen die äußeren Dichtbänder (23, 24) durch die äußeren Teile der Kraftabnahmeansätze (18, 19) und die inneren Dichtbänder (22) durch die Kolben (14, 38) hindurchgeführt sind.

10. Druckmittelzylinder nach einem der vorgehenden Ansprüche, dadurch gekennzeichnet, daß das Gehäuse (11) im Bereich der Längsschlitze (20, 21) eine mit dem Dichtband (23, 24) zusammenwirkende Einrichtung zu dessen positiver Festlegung aufweist.

## Claims

1. Pressure fluid cylinder with a tubular casing 11, in which are arranged several parallel, cylindrical inner zones (12, 13) with in each case one longitudinally directed slot (20, 21) and in each inner zone (12, 13) is longitudinally displaceably guided a piston (14, 16, 36, 39), whereof each has a power take-off lug (18, 19) projecting outwards through the associated slot (20, 21) and which is connected via a connecting device to the other power take-off lugs (18, 19), at least one inner zone (12, 13) being frontally closed and provided with inlet and outlet ports, the piston (14, 36) in said inner zone (12, 13) is provided at both ends with a seal (15) and the longitudinal slot (20) of said inner zone (12) is sealed from the inside by a sealing strip (22), characterized in that two inner zones (12, 13) and two pistons (14, 16, 36, 39) are arranged in juxtaposed manner in the common casing (11) and are separated from one another by a central partition (45) and the power take-off lugs (18, 19) of the two pistons (14, 16, 36, 39) are parallel to one another and screwed with a connecting plate (26), the sealed longitudinal slot (20) of the at least one inner zone (12, 13) being additionally sealed by an outer sealing strip (23), which extends through the power take-off lug (18).

2. Pressure fluid cylinder according to claim 1, characterized in that one piston (16, 39) has no seal and serves as a guide piston.

3. Pressure fluid cylinder according to claim 1, characterized in that both pistons (14, 36) have seals (15).

4. Pressure fluid cylinder according to one of the preceding claims, characterized in that the inner zones (12, 13) are constructed for the action of the same pressure fluid.

5. Pressure fluid cylinder according to one of the claims 1 to 3, characterized in that the inner zones (12, 13) are constructed for the action of different pressure fluids.

6. Pressure fluid cylinder according to one of the preceding claims, characterized in that both pistons (14, 16, 36, 39) have roughly the same length and the connecting plate (26) extends over roughly the entire length of the piston (14, 16, 36, 39).

7. Pressure fluid cylinder according to one of the claims 1 and 3 to 6, characterized in that both pistons (14, 36) have an identical construction.

8. Pressure fluid cylinder according to one of the claims 2 to 7, characterized in that the longitudinal slot (21) of the inner zone (13) is sealed from the outside for the guide piston (16, 39) by a sealing strip (24), which is passed through the outer portion of the power take-off lug (19) of guide piston (16, 39).

9. Pressure fluid cylinder according to one of the preceding claims characterized in that the longitudinal slots (20, 21) of both pistons (14, 16, 36, 39) are sealed from the outside and from the inside by in each case one sealing strip (22, 23, 24), whereof the outer sealing strips (23, 24) are passed through the outer portions of the power take-off lugs (18, 19) and the inner sealing strips (22) through the pistons (14, 36).

10. Pressure fluid cylinder according to one of the preceding claims, characterized in that in the vicinity of the longitudinal slots (20, 21), casing (11) is provided with a device cooperating with the sealing strip (23, 24) for the positive fixing thereof.

## Revendication

Cylindre à moyen de pression, comportant un boîtier tubulaire (11) dans lequel sont agencés plusieurs espaces internes parallèles et cylindriques (12, 13) dont chacun comporte une fente (20, 21) s'étendant en direction longitudinale, un piston (14, 16, 36, 39) étant guidé de façon à pouvoir coulisser longitudinalement dans chaque espace interne (12, 13), chaque piston étant pourvu d'une embase de prise de force (16, 19) faisant saillie à l'extérieur par la fente correspondante (20, 21), chaque embase étant reliée aux autres par un dispositif de liaison, au moins l'un des espaces internes étant fermé du côté frontal et pourvu d'ouvertures d'entrée et de sortie, le piston (14, 36) guidé dans cet espace interne (12, 13) comportant un joint (15) aux deux extrémités, et la fente longitudinale (20) de cet espace interne (12) étant étanchéifiée de l'intérieur par une bande d'étanchéité (22), caractérisé en ce que deux espaces internes (12, 13) et deux pistons (14, 16, 36, 39) sont disposés l'un à côté de l'autre dans le boîtier commun (11) et sont séparés l'un de l'autre par une paroi de séparation médiane (45), et en ce que les embases de prise de force (18, 19) des deux pistons (14, 16, 36, 39) s'étendent parallèlement l'un à l'autre et sont pourvues d'une plaque de liaison vissée (26), la fente longitudinale étanchéifiée (20) d'au moins l'un des espaces internes (12, 13) étant en outre étanchéifiée par une bande d'étanchéité extérieure (23) qui s'étend au travers de l'embase de prise de force (16).

2. Cylindre selon la revendication 1, caractérisé en ce qu'un piston (16, 39) ne comporte aucun joint et sert de piston de guidage.

3. Cylindre selon la revendication 1, caractérisé en ce que les deux pistons (14, 36) comportent des joints (15).

4. Cylindre selon l'une quelconque des revendications précédentes, caractérisé en ce que les espaces internes (12, 13) sont constitués pour l'actionnement du même moyen de pression.

5. Cylindre selon l'une quelconque des revendications 1 à 3, caractérisé en ce que les espaces internes (12, 13) sont constitués pour l'actionnement de moyens de pression différents.

6. Cylindre selon l'une quelconque des revendications précédentes, caractérisé en ce que les deux pistons (14, 16, 36, 39) ont approximativement la même longueur et en ce que la plaque de liaison (26) s'étend approximativement sur la même longueur que les pistons (14, 16, 36, 39).

7. Cylindre selon l'une quelconque des revendications 1 et 3 à 6, caractérisé en ce que les deux pistons (14, 36) sont constitués identiquement.

8. Cylindre selon l'une quelconque des revendications 2 à 7, caractérisé en ce que la fente longitudinale (21) de l'espace interne (13) prévu pour le piston de guidage (16, 39) est étanchéifiée de l'extérieur par une bande d'étanchéité (24) qui est traversée par la partie extérieure de l'embase de prise de force (19) du piston de guidage (16, 39).

9. Cylindre selon l'une quelconque des revendications précédentes, caractérisé en ce que les fentes longitudinales (20, 21) des deux pistons (14, 16, 36, 39) sont étanchéifiées de l'extérieur et de l'intérieur chacune par une bande d'étanchéité (22, 23, 24) dont les bandes d'étanchéité extérieures (23, 24) sont traversées par la partie extérieure de l'embase de prise de force (18, 19) et les bandes d'étanchéité intérieures (22) sont traversées par les pistons (14, 36).

10. Cylindre selon l'une quelconque des revendications précédentes, caractérisé en ce que le boîtier (11) comporte, dans la zone de la fente longitudinale (20, 21), un dispositif coopérant avec la bande d'étanchéité (23, 24) pour assurer positivement sa fixation.

## FIG.1

## FIG.4

FIG. 3

FIG. 2

FIG. 5

FIG.6